(19) Europäisches Patentamt
European Patent Office
Office européen des brevets

(11) **EP 4 173 843 B1**

(12) **EUROPEAN PATENT SPECIFICATION**

(45) Date of publication and mention
of the grant of the patent:
**22.10.2025  Bulletin 2025/43**

(21) Application number: **22187258.3**

(22) Date of filing: **27.07.2022**

(51) International Patent Classification (IPC):
***B60C 1/00*** *(2006.01)*

(52) Cooperative Patent Classification (CPC):
(C-Sets available)
**B60C 1/0016; B60C 11/033; C08L 7/00; C08L 9/06;
Y02T 10/86**                                    (Cont.)

(54) **HEAVY DUTY TIRE**

SCHWERLASTREIFEN

PNEU POIDS LOURD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2021  JP 2021176548**

(43) Date of publication of application:
**03.05.2023  Bulletin 2023/18**

(73) Proprietor: **Sumitomo Rubber Industries, Ltd.
Kobe-shi, Hyogo 651-0072 (JP)**

(72) Inventor: **IZUMO, Suguru
Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 3 228 658      EP-A1- 3 421 260
EP-A1- 3 677 638**

(52) Cooperative Patent Classification (CPC): (Cont.)

    C-Sets
    **C08L 7/00, C08L 9/06, C08K 3/04, C08L 25/16;**
    **C08L 7/00, C08L 9/06, C08L 25/16, C08K 3/04,**

**C08K 3/36;**
**C08L 7/00, C08L 9/06, C08L 45/00, C08K 3/04;**
**C08L 7/00, C08L 9/06, C08L 57/02, C08K 3/04,**
**C08K 3/36;**
**C08L 7/00, C08L 9/06, C08L 93/00, C08K 3/04**

**Description**

TECHNICAL FIELD

The present invention relates to a heavy duty tire.

BACKGROUND ART

Heavy duty vehicles such as trucks and buses, which are used for purposes such as carrying goods and people, may be subjected to higher load conditions and may be more affected by inertia than normal tires. Thus, it is desirable to improve wet performance under high load conditions.
In EP 3 677 638 A1 a known rubber composition for a heavy duty tire is disclosed.
Further rubber compositions for pneumatic tires are described in EP 3 228 658 A1 and in EP 3 421 260 A1.

SUMMARY OF INVENTION

TECHNICAL PROBLEM

The present invention aims to solve the above problem and provide a heavy duty tire having excellent wet performance under high loads.

SOLUTION TO PROBLEM

The present invention relates to a heavy duty tire according to claim 1.

ADVANTAGEOUS EFFECTS OF INVENTION

The heavy duty tire of the present invention includes a tread containing at least one rubber component and at least one resin, and satisfies relationships (1) to (3) with respect to the total styrene content (S) of the rubber component and the negative ratio (N) of the tread. Thus, the heavy duty tire has excellent wet performance under high loads.

DESCRIPTION OF EMBODIMENTS

The heavy duty tire of the present invention includes a tread containing at least one rubber component and at least one resin, and satisfies relationships (1) to (3) with respect to the total styrene content (S) of the rubber component and the negative ratio (N) of the tread.
The reason why the heavy duty tire provides the above-mentioned advantageous effect is believed to be as follows.
When a small amount of styrene is incorporated in a rubber as a structural unit (monomer unit) of the rubber, and further the rubber is compounded with a resin component, an interaction occurs between the styrene and the resin component. Then, it is considered that the flexibility of the rubber is maintained due to the small amount of styrene, while a large energy loss occurs between the resin and styrene portion upon deformation under high load conditions.
Moreover, by adjusting the negative ratio to 25% or lower, it is possible to increase the area to contact the ground, enabling the occurrence of a large energy loss over the entire tread surface. Thus, it is considered that good wet performance can be obtained under high load conditions.
Nevertheless, even when the negative ratio is 25% or lower, a higher negative ratio leads to a smaller contact area, resulting in less energy loss over the entire tread surface. However, it is considered that since the tire is adjusted to satisfy the relationship: $S/N \geq 0.04$ to increase the styrene content, good wet performance under high loads can be obtained.
It is believed that a heavy duty tire having excellent wet performance under high loads can be provided due to the above mechanism of action.
As described above, the tire solves the problem (purpose) of providing a tire having excellent wet performance under high loads by having a structure satisfying the relationship (1): $1.0\%$ by mass $< S \leq 12.0\%$ by mass, the relationship (2): $N \leq 25\%$, and the relationship (3): $S/N \geq 0.04$. In other words, the structure satisfying relationships (1), (2), and (3) does not define the problem (purpose), and the problem herein is to provide a tire having excellent wet performance under high loads. In order to solve this problem, the tire is provided with a structure satisfying the parameters.
The present invention relates to a heavy duty tire, and the term "heavy duty tire" refers to a tire with a maximum load capacity of 1400 kg or higher. Here, the term "maximum load capacity" refers to a maximum load capacity specified for each tire by the standard in a standard system including standards according to which tires are provided, and may be, for example, the maximum load capacity based on the load index (LI) in the Japan Automobile Tyre Manufacturers Association standard (JATMA standard), the maximum value shown in Table "TIRE LOAD LIMITS AT VARIOUS COLD INFLATION PRESSURES" in TRA, or the "load capacity" in ETRTO.

The heavy duty tire may be, for example, but not limited to, a pneumatic tire, a solid tire, or an airless tire. Preferably it is a pneumatic tire, among others.

The heavy duty tire can be applied to various tires, including for example a heavy duty pneumatic tire, and a non-pneumatic tire whose interior is not filled with pressurized air. For example, the heavy duty tire may be a tire for trucks, buses, or other heavy duty vehicles.

The tread in the heavy duty tire includes a tread rubber composition containing one or more rubber components and one or more resins.

The rubber components in the rubber composition contribute to crosslinking. Usually, the rubber components correspond to polymer components having a weight average molecular weight (Mw) of 10,000 or more which cannot be extracted with acetone.

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The rubber composition satisfies the following relationship (1):

$$\text{(1)} \quad 1.0\% \text{ by mass} < S \leq 12.0\% \text{ by mass}$$

wherein S represents the total styrene content (% by mass) of the rubber components.

The upper limit of S is preferably 10.0% by mass or lower, more preferably 9.0% by mass or lower, still more preferably 8.0% by mass or lower. The lower limit of S is preferably 2.5% by mass or higher, more preferably 3.5% by mass or higher, still more preferably 4.0% by mass or higher. When S is within the range indicated above, the advantageous effect tends to be better achieved.

Here, the total styrene content of the rubber components refers to the total amount (unit: % by mass) of styrene portions in the total rubber components, and may be calculated by $\Sigma$[(Amount of each rubber component) $\times$ (Styrene content of the each rubber component)/100]. For example, when 100% by mass of rubber components include 85% by mass of a SBR having a styrene content of 40% by mass, 5% by mass of a SBR having a styrene content of 25% by mass, and 10% by mass of a BR having a styrene content of 0% by mass, the total styrene content of the rubber components is 35.25% by mass (= 85 $\times$ 40/100 + 5 $\times$ 25/100 + 10 $\times$ 0/100).

The total vinyl content of the rubber components is preferably 2.5% by mass or higher, more preferably 4.0% by mass or higher, still more preferably 4.5% by mass or higher, but is preferably 15.0% by mass or lower, more preferably 11.0% by mass or lower, still more preferably 9.0% by mass or lower. When the total vinyl content is within the range indicated above, the advantageous effect tends to be better achieved.

Here, the total vinyl content of the rubber components refers to the total vinyl bond content (unit: parts by mass) of the butadiene portions of the SBR and BR included in the rubber components, where the total mass of the rubber components is taken as 100, and may be calculated by $\Sigma$[(Amount of each rubber component) $\times$ (Percentage (% by mass) of vinyl bond content of butadiene portion of the each rubber component based on total mass of the each rubber component)]. For example, when 100 parts by mass of rubber components include 85 parts by mass of a SBR having a styrene content of 40% by mass and a vinyl content of 30% by mass, 5 parts by mass of a SBR having a styrene content of 20% by mass and a vinyl content of 20% by mass, and 10 parts by mass of a BR having a vinyl content of 10% by mass, the total vinyl content of the rubber components is 17.1 parts by mass (= 85 $\times$ (100 (% by mass) - 40 (% by mass)) $\times$ 30 (% by mass) + 5 $\times$ (100 (% by mass) - 20 (% by mass)) $\times$ 20 (% by mass) + 10 $\times$ 10 (% by mass)).

Here, the styrene content and vinyl content of each rubber component can be measured by nuclear magnetic resonance (NMR).

Moreover, in EXAMPLES herein, the total styrene content and total vinyl content of the rubber components are calculated according to the above-mentioned equations, but they may be analyzed from the tire using, for example, a pyrolysis gas chromatography/mass spectrometry (Py-GC/MS) system.

Any rubber component may be used including those known in the tire field. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these may be used alone, or two or more of these may be used in combination. Among these, it is preferred to incorporate isoprene-based rubbers and/or SBR. It is more preferred to further incorporate BR.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

In the rubber composition, the amount of isoprene-based rubbers based on 100% by mass of the rubber component content is preferably 20% by mass or more, more preferably 50% by mass or more, still more preferably 60% by mass or more, particularly preferably 70% by mass or more. The upper limit is preferably 90% by mass or less, more preferably 85% by mass or less, still more preferably 80% by mass or less. When the amount is within the range indicated above, the advantageous effect tends to be better achieved.

Any SBR may be used including for example emulsion-polymerized styrene-butadiene rubbers (E-SBR) and solution-polymerized styrene-butadiene rubbers (S-SBR). Examples of commercial products are available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, but is preferably 40% by mass or lower, more preferably 35% by mass or lower, still more preferably 30% by mass or lower, particularly preferably 26% by mass or lower. When the styrene content is within the range indicated above, the advantageous effect tends to be better achieved.

The vinyl content of the SBR is preferably 20% by mass or higher, more preferably 24% by mass or higher, still more preferably 30% by mass or higher, but is preferably 65% by mass or lower, more preferably 50% by mass or lower, still more preferably 45% by mass or lower, particularly preferably 42% by mass or lower. When the vinyl content is within the range indicated above, the advantageous effect tends to be better achieved.

Here, when the SBR is a single type of SBR, the styrene content of the SBR refers to the styrene content of the single type of SBR, while when the SBR is multiple types of SBR, the styrene content refers to the average styrene content.

The average styrene content of SBR may be calculated by $\{\Sigma[(\text{Amount of each SBR}) \times (\text{Styrene content of the each SBR})]\}/(\text{Total amount of all types of SBR})$. For example, when 100% by mass of rubber components include 85% by mass of a SBR having a styrene content of 40% by mass and 5% by mass of a SBR having a styrene content of 25% by mass, the average styrene content of SBR is 39.2% by mass (= $(85 \times 40 + 5 \times 25)/(85 + 5)$).

Moreover, the vinyl content of the SBR refers to the vinyl bond content (unit: % by mass), where the total mass of the butadiene portion of the SBR is taken as 100, and the following equation is satisfied: Vinyl content (% by mass) + Cis content (% by mass) + Trans content (% by mass) = 100 (% by mass). When the SBR is a single type of SBR, the vinyl content of the SBR refers to the vinyl content of the single type of SBR, while when the SBR is multiple types of SBR, the vinyl content refers to the average vinyl content.

The average vinyl content of SBR may be calculated by $\Sigma\{(\text{Amount of each SBR}) \times [100 \,(\% \text{ by mass}) - (\text{Styrene content}(\% \text{ by mass}) \text{ of the each SBR})] \times (\text{Vinyl content}(\% \text{ by mass}) \text{ of the each SBR})\}/\Sigma\{(\text{Amount of the each SBR}) \times [100 \,(\% \text{ by mass}) - (\text{Styrene content}(\% \text{ by mass}) \text{ of the each SBR})]\}$. For example, when 100 parts by mass of rubber components include 75 parts by mass of a SBR having a styrene content of 40% by mass and a vinyl content of 30% by mass, 15 parts by mass of a SBR having a styrene content of 25% by mass and a vinyl content of 20% by mass, and the remaining 10 parts by mass of rubber(s) other than SBR, the average vinyl content of SBR is 28% by mass (= $\{75 \times (100 \,(\% \text{ by mass}) - 40 \,(\% \text{ by mass})) \times 30 \,(\% \text{ by mass}) + 15 \times (100 \,(\% \text{ by mass}) - 25 \,(\% \text{ by mass})) \times 20 \,(\% \text{ by mass})\}/\{75 \times (100 \,(\% \text{ by mass}) - 40 \,(\% \text{ by mass})) + 15 \times (100 \,(\% \text{ by mass}) - 25 \,(\% \text{ by mass}))\}$).

In the rubber composition, the amount of SBR based on 100% by mass of the rubber component content is preferably 5% by mass or more, more preferably 10% by mass or more, still more preferably 15% by mass or more, particularly preferably 20% by mass or more, but is preferably 50% by mass or less, more preferably 30% by mass or less, still more preferably 25% by mass or less. When the amount is within the range indicated above, the advantageous effect tends to be better achieved.

In the rubber composition, the combined amount of isoprene-based rubbers and SBR based on 100% by mass of the rubber component content is preferably 70% by mass or more, more preferably 80% by mass or more, still more preferably 90% by mass or more, and may be 100% by mass. When the combined amount is within the range indicated above, the advantageous effect tends to be better achieved.

BR may be incorporated to further improve wet performance under high loads.

The reason for this advantageous effect is believed to be because the presence of a small amount of BR increases flexibility in the microdeformation region, facilitating conformity even to a wet road surface.

Any BR may be used, and examples include those commonly used in the tire industry, including: high cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). Each of these may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

Here, when the BR is a single type of BR, the cis content of the BR refers to the cis content of the single type of BR, while when the BR is multiple types of BR, the cis content refers to the average cis content.

The average cis content of BR may be calculated by {Σ[(Amount of each BR) × (Cis content of the each BR)]}/(Total amount of all types of BR). For example, when 100% by mass of rubber components include 20% by mass of a BR having a cis content of 90% by mass and 10% by mass of a BR having a cis content of 40% by mass, the average cis content of BR is 73.3% by mass (= (20 × 90 + 10 × 40)/(20 + 10)).

The amount of BR based on 100% by mass of the rubber component content is preferably 5% by mass or more, more preferably 8% by mass or more, still more preferably 10% by mass or more, but is preferably 30% by mass or less, more preferably 25% by mass or less, still more preferably 20% by mass or less. When the amount is within the range indicated above, the advantageous effect tends to be better achieved.

The rubber components may be either oil extended rubbers prepared by oil extension or resin extended rubbers prepared by resin extension. These may be used alone or in combinations of two or more. Preferred among these are oil extended rubbers.

Here, the oils and resins used in the oil extended rubbers and resin extended rubbers, respectively, are as described for the plasticizers below. Moreover, the oil content of the oil extended rubbers and the resin content of the resin extended rubbers are not limited, but are each usually about 10 to 50 parts by mass per 100 parts by mass of the rubber solid content.

The rubber components may be modified to introduce therein a functional group interactive with filler such as silica.

Examples of the functional group include a silicon-containing group (-$SiR_3$ where R is the same as or different from each other and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, all of which may be substituted. Preferred among these is a silicon-containing group. More preferred is a -$SiR_3$ group where R is the same as or different from each other and represents a hydrogen atom, a hydroxy group, a hydrocarbon group (preferably a C1-C6 alkyl group, more preferably a C1-C6 alkyl group) or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition desirably contains a filler.

In the rubber composition, the amount (total amount) of fillers per 100 parts by mass of the rubber component content is preferably 20 parts by mass or more, more preferably 50 parts by mass or more, still more preferably 60 parts by mass or more, but is preferably 150 parts by mass or less, more preferably 120 parts by mass or less, still more preferably 100 parts by mass or less, particularly preferably 80 parts by mass or less. When the amount is within the range indicated above, the advantageous effect tends to be better achieved.

Examples of fillers include inorganic fillers.

In the rubber composition, the amount of inorganic fillers per 100 parts by mass of the rubber component content is preferably 5 parts by mass or more, more preferably 20 parts by mass or more, still more preferably 50 parts by mass or more, but is preferably 120 parts by mass or less, more preferably 80 parts by mass or less, still more preferably 60 parts by mass or less, particularly preferably 55 parts by mass or less. When the amount is within the range indicated above, the advantageous effect tends to be better achieved.

Examples of inorganic fillers include silica, clay, alumina, talc, calcium carbonate, magnesium carbonate, aluminum hydroxide, magnesium hydroxide, magnesium oxide, and titanium oxide. These may be used alone or in combinations of two or more. Silica is preferred among these.

Examples of the silica include dry silica (anhydrous silicic acid) and wet silica (hydrous silicic acid). Wet silica is preferred because it has a large number of silanol groups. The raw material of the silica may be either water glass (sodium silicate) or a biomass material such as rice husks. Usable commercial products are available from Evonik, Tosoh Silica Corporation, Solvay Japan, Ltd., Tokuyama Corporation, etc. Each of these may be used alone, or two or more of these may be used in combination.

The average particle size of the silica is preferably 24 nm or less, more preferably 17 nm or less, still more preferably 16 nm or less, particularly preferably 15 nm or less, but is preferably 6 nm or more, more preferably 9 nm or more, still more preferably 12 nm or more. When the average particle size is within the range indicated above, the advantageous effect tends to be better achieved.

Herein, the average particle size of the silica is determined using transmission electron microscopy (TEM). Specifically, silica particles are photographed using a transmission electron microscope to determine the particle size, and the average of the particle sizes of 100 fine particles is defined as the average particle size. Here, the particle size of a particle having a spherical shape is the diameter of the sphere, the particle size of a particle having a needle shape or a rod shape is the minor diameter of the particle, and the particle size of a particle having an atypical shape is the average of the particle sizes passing through the center of the particle.

In the rubber composition, the amount of silica per 100 parts by mass of the rubber component content is preferably 5 parts by mass or more, more preferably 20 parts by mass or more, still more preferably 50 parts by mass or more, but is preferably 120 parts by mass or less, more preferably 80 parts by mass or less, still more preferably 60 parts by mass or less, particularly preferably 55 parts by mass or less. When the amount is within the range indicated above, the advantageous effect tends to be better achieved.

To better the advantageous effect, the rubber composition desirably has a percentage of silica of 20% by mass or higher based on 100% by mass of the filler content.

The reason for this advantageous effect is believed to be because silica is more flexible in the microdeformation region than carbon black and is more likely to conform even to a wet road surface.

The percentage of silica based on 100% by mass of the filler content is preferably 33% by mass or higher, more preferably 50% by mass or higher, still more preferably 70% by mass or higher, but is preferably 95% by mass or lower, more preferably 92% by mass or lower, still more preferably 90% by mass or lower. When the percentage of silica is within the range indicated above, the advantageous effect tends to be better achieved.

To better achieve the advantageous effect and also to maintain good durability, desirably, the rubber composition has a percentage of silica of 50% by mass or higher based on 100% by mass of the filler content and further contains a silica having an average particle size of 15 nm or less.

The reason for this advantageous effect is believed to be as follows.

Since, as described above, silica is more flexible in the microdeformation region than carbon black and is more likely to conform even to a wet road surface, the higher the proportion of silica, the more improved the wet performance. Meanwhile, when the proportion of silica is higher than the proportion of carbon black, life (durability) tends to be significantly reduced. However, it is believed that the use of fine particle size silica provides excellent conformity to a wet road surface and also maintains durability.

Preferred examples of usable fillers other than inorganic fillers include carbon black.

Non-limiting examples of the carbon black include N134, N110, N220, N234, N219, N339, N330, N326, N351, N550, and N762. The raw material of the carbon black may be a biomass material such as lignin or a plant oil. Moreover, the carbon black may be produced either by burning such as the furnace process or by hydrothermal carbonization (HTC). Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The cetyltrimethylammonium bromide (CTAB) specific surface area of the carbon black is preferably 110 $m^2$/g or more, more preferably 120 $m^2$/g or more, still more preferably 130 $m^2$/g or more, but is preferably 200 $m^2$/g or less, more preferably 160 $m^2$/g or less, still more preferably 140 $m^2$/g or less. When the CTAB specific surface are is within the range indicated above, the advantageous effect tends to be better achieved.

Here, the CTAB specific surface area of the carbon black is measured in accordance with JIS K6217-3:2001.

In the rubber composition, the amount of carbon black per 100 parts by mass of the rubber component content is preferably 1 part by mass or more, more preferably 5 parts by mass or more, still more preferably 10 parts by mass or more, particularly preferably 15 parts by mass or more, but is preferably 80 parts by mass or less, more preferably 50 parts by mass or less, still more preferably 45 parts by mass or less, particularly preferably 40 parts by mass or less. When the amount is within the range indicated above, the advantageous effect tends to be better achieved.

The rubber composition contains one or more plasticizers.

Herein, the term "plasticizer" refers to a material that can impart plasticity to rubber components. Examples include liquid plasticizers (plasticizers which are liquid at 25°C) and solid plasticizers (plasticizers which are solid at 25°C). These may be used alone or in combinations of two or more.

In the rubber composition, the amount of plasticizers (the combined amount of liquid plasticizers and solid plasticizers) per 100 parts by mass of the rubber component content is preferably 5 parts by mass or more, more preferably 8 parts by mass or more, still more preferably 10 parts by mass or more, but is preferably 50 parts by mass or less, more preferably 30 parts by mass or less, still more preferably 20 parts by mass or less. When the amount is within the range indicated above, the advantageous effect tends to be better achieved.

Here, the amount of plasticizers includes the amount of the oils contained in the rubbers (oil extended rubbers) or sulfur (oil-containing sulfur), if used.

Examples of liquid plasticizers include oils, liquid polymers (e.g., liquid resins, liquid diene polymers), essential oils from natural sources, such as turpentine oil, and ester plasticizers. Examples of solid plasticizers include solid resins which are solid at 25°C, such as those generally used in the tire industry. These may be used alone or in combinations of two or more.

In the rubber composition, the amount of liquid plasticizers (preferably oils) per 100 parts by mass of the rubber component content is preferably 10 parts by mass or less, more preferably 5 parts by mass or less, still more preferably 3 parts by mass or less, particularly preferably 0 parts by mass. When the amount is within the range indicated above, the advantageous effect tends to be better achieved.

Examples of liquid plasticizers include oils, liquid polymers, and liquid resins. These may be used alone or in combinations of two or more.

Non-limiting examples of the oils include conventional oils, including process oils such as paraffinic process oils, aromatic process oils, and naphthenic process oils, low polycyclic aromatic (PCA) process oils such as TDAE and MES, and plant oils, and mixtures thereof. These may be used alone or in combinations of two or more. Paraffinic process oils are preferred among these. Here, lubricating oils after being used in mixers for mixing rubber, automobile engines, or other applications, waste cooking oils, or the like may appropriately be used from the standpoint of life cycle analysis.

The oils may be commercially available from, for example, Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

Examples of liquid resins include terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins, all of which are liquid at 25°C.

The liquid resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group.

The liquid diene polymers may be commercially available from, for example, Sartomer, Kuraray Co., Ltd., etc.

Examples of solid plasticizers include solid resins generally used as compounding ingredients for tires. Specific examples include naturally-occurring resins such as terpene resins and rosin resins, styrene resins, olefin resins, C5 resins, C9 resins, C5/C9 resins, dicyclopentadiene resins, coumarone resins, indene resins, coumarone-indene resins, acrylic resins, and urethane resins. These solid resins may be hydrogenated (hydrogenated solid resins). The solid resins may be used alone, or two or more of them may be used in admixture. Moreover, the resins themselves may be copolymers of multiple types of monomer components. From the standpoint of wet performance under high loads, styrene resins, C5 resins, C9 resins, C5/C9 resins, and dicyclopentadiene resins, and hydrogenated products thereof are preferred among these, with styrene resins, C5/C9 resins, and dicyclopentadiene resins, and hydrogenated products thereof being more preferred.

The reason for this advantageous effect is believed to be because, unlike naturally-occurring resins such as terpene resins and rosin resins, resins such as styrene resins, C5 resins, C9 resins, C5/C9 resins, and dicyclopentadiene resins, and hydrogenated products thereof are more likely to interact with the styrene portion in the rubber components.

In the rubber composition, the amount of solid plasticizers per 100 parts by mass of the rubber component content is preferably 5 parts by mass or more, more preferably 8 parts by mass or more, still more preferably 10 parts by mass or more, but is preferably 50 parts by mass or less, more preferably 30 parts by mass or less, still more preferably 20 parts by mass or less. When the amount is within the range indicated above, the advantageous effect tends to be better achieved.

The term "solid styrene resins" refers to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, or p-chlorostyrene), copolymers produced by copolymerization of two or more styrenic monomers, and copolymers of styrenic monomers and additional monomers copolymerizable therewith. Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride. Preferred among these are solid α-methylstyrene resins (e.g., α-methylstyrene homopolymers, copolymers of α-methylstyrene and styrene).

The term "dicyclopentadiene resins" refers to resins containing dicyclopentadiene as a main monomer component of the backbone (main chain) of the resins, and examples include polymers having a dicyclopentadiene-derived unit content of 50% by mass or more based on 100% by mass of the resins. Specific examples of the dicyclopentadiene resins include petroleum resins made mainly from dicyclopentadiene produced by dimerization of cyclopentadiene extracted from the C5 fraction of petroleum. The dicyclopentadiene resins may be hydrogenated dicyclopentadiene resins.

Examples of C5 resins include aliphatic petroleum resins containing, as main components (at least 50% by mass, preferably at least 80% by mass), olefins or diolefins from the C5 fraction obtained by naphtha cracking. Examples of C9 resins include aromatic petroleum resins containing, as main components (at least 50% by mass, preferably at least 80% by mass), vinyltoluene from the C9 fraction obtained by naphtha cracking. Examples of C5/C9 resins include resins containing, as main components (at least 50% by mass, preferably at least 80% by mass), olefins or diolefins from the C5 fraction and vinyltoluene from the C9 fraction. These resins may be resins copolymerized with the above-mentioned additional monomers.

The solid plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Here, the rubber composition contains one or more resins (the above-described liquid resins and solid resins) as the plasticizers.

Preferred among the resins are solid resins, preferably solid resins other than naturally-occurring resins which are solid at 25°C, more preferably styrene resins, C5 resins, C9 resins, C5/C9 resins, and dicyclopentadiene resins, and hydrogenated products thereof, all of which are solid at 25°C, still more preferably styrene resins, C5/C9 resins, and dicyclopentadiene resins, and hydrogenated products thereof, all of which are solid at 25°C.

The softening point of the resins is preferably 30°C or higher, more preferably 50°C or higher, still more preferably 80°C or higher, but is preferably 200°C or lower, more preferably 160°C or lower, still more preferably 140°C or lower, particularly preferably 120°C or lower. When the softening point is within the range indicated above, the advantageous effect tends to be more suitably achieved.

Herein, the softening point of the resins is determined as set forth in JIS K 6220-1:2001 using a ring and ball softening point measuring apparatus and defined as the temperature at which the ball drops down.

In the rubber composition, the amount of resins (preferably the above-described solid resins, more preferably styrene resins which are solid at 25°C, C5/C9 resins which are solid at 25°C, and dicyclopentadiene resins which are solid at 25°C, and hydrogenated products thereof which are solid at 25°C) per 100 parts by mass of the rubber component content is preferably 5 parts by mass or more, more preferably 8 parts by mass or more, still more preferably 10 parts by mass or more, but is preferably 50 parts by mass or less, more preferably 30 parts by mass or less, still more preferably 20 parts by mass or less. When the amount is within the range indicated above, the advantageous effect tends to be better achieved. Here, the combined amount of styrene resins, C5 resins, C9 resins, and C5/C9 resins, and dicyclopentadiene resins, and hydrogenated products thereof, all of which are solid at 25°C, is also desirably within the range as indicated above. Moreover, the amounts of the respective resins are also desirably within the range as indicated above.

The rubber composition may contain a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from, for example, Evonik Degussa, Momentive, Shin-Etsu Silicone, Tokyo Chemical Industry Co., Ltd., AZmax. Co., Dow Corning Toray Co., Ltd., etc. These may be used alone or in combinations of two or more.

In the rubber composition, the amount of silane coupling agents per 100 parts by mass of the silica content is preferably 3 parts by mass or more, more preferably 6 parts by mass or more, still more preferably 8 parts by mass or more, but is preferably 16 parts by mass or less, more preferably 14 parts by mass or less, still more preferably 12 parts by mass or less. When the amount is within the range indicated above, the advantageous effect tends to be better achieved.

The rubber composition may contain an antioxidant.

Examples of the antioxidant include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these may be used alone, or two or more of these may be used in combination.

In the rubber composition, the amount of antioxidants per 100 parts by mass of the rubber component content is preferably 0.5 parts by mass or more, more preferably 0.8 parts by mass or more, still more preferably 1.0 parts by mass or more, but is preferably 10.0 parts by mass or less, more preferably 6.0 parts by mass or less, still more preferably 4.0 parts by mass or less. When the amount is within the range indicated above, the advantageous effect tends to be better achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these may be used alone, or two or more of these may be used in combination.

In the rubber composition, the amount of waxes per 100 parts by mass of the rubber component content is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain stearic acid.

The stearic acid used may be a conventional one. Usable commercial products are available from NOF Corporation, Kao Corporation, FUJIFILM Wako Pure Chemical Corporation, Chiba Fatty Acid Co., Ltd., etc. Each of these may be used alone, or two or more of these may be used in combination.

In the rubber composition, the amount of stearic acid per 100 parts by mass of the rubber component content is preferably 1.0 parts by mass or more, more preferably 2.0 parts by mass or more, still more preferably 3.0 parts by mass or more, but is preferably 10.0 parts by mass or less, more preferably 6.0 parts by mass or less. When the amount is within the range indicated above, the advantageous effect tends to be better achieved.

The rubber composition may contain zinc oxide.

The zinc oxide used may be a conventional one. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these may be used alone, or two or more of these may be used in combination.

In the rubber composition, the amount of zinc oxide per 100 parts by mass of the rubber component content is preferably 1.0 parts by mass or more, more preferably 2.5 parts by mass or more, still more preferably 3.5 parts by mass or more, but is preferably 10.0 parts by mass or less, more preferably 6.0 parts by mass or less. When the amount is within the range indicated above, the advantageous effect tends to be better achieved.

The rubber composition may contain sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

In the rubber composition, the amount of sulfur per 100 parts by mass of the rubber component content is preferably 0.5 parts by mass or more, more preferably 1.5 parts by mass or more, still more preferably 1.8 parts by mass or more, but is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

In the rubber composition, the amount of vulcanization accelerators per 100 parts by mass of the rubber component content is preferably 1.5 parts by mass or more, more preferably 2.5 parts by mass or more, still more preferably 3.5 parts by mass or more, but is preferably 10.0 parts by mass or less, more preferably 8.0 parts by mass or less, still more preferably 7.0 parts by mass or less. When the amount is within the range indicated above, the advantageous effect tends to be better achieved.

In addition to the above-mentioned components, the rubber composition may further contain additives commonly used in the tire industry, such as organic peroxides. The amounts of such additives are each preferably 0.1 to 200 parts by mass per 100 parts by mass of the rubber component content.

The rubber composition may be prepared, for example, by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. Then, the composition obtained after kneading vulcanizing agents and vulcanization accelerators is usually vulcanized by, for example, press vulcanization. The vulcanization temperature is usually 140 to 190°C, preferably 150 to 185°C. The vulcanization time is usually 5 to 15 minutes.

The rubber composition is for use in treads (in particular, parts (cap treads) to come into contact with the road surface during driving).

The heavy duty tire of the present invention may be produced from the above-described rubber composition by usual methods.

Specifically, the rubber composition in an unvulcanized state may be extruded into the shape of a tread and assembled with other tire components on a tire building machine in a usual manner to build an unvulcanized tire. The unvulcanized tire may be heated and pressurized in a vulcanizer to produce a tire.

The heavy duty tire includes a tread formed from the rubber composition containing one or more rubber components and one or more resins, and satisfies the following relationship (2):

$$(2) \quad N \leq 25\%$$

wherein N represents the negative ratio (%) of the tread.

The upper limit of N is preferably 20% or lower, more preferably 17% or lower, still more preferably 15% or lower. The lower limit of N is preferably 5% or higher, more preferably 8% or higher, still more preferably 10% or higher. When N is within the range indicated above, the advantageous effect tends to be better achieved.

Here, the negative ratio (negative ratio within the ground contact surface of the tread portion) refers to the ratio of the total groove area within the ground contact surface to the total area of the ground contact surface and is determined as described below.

Herein, when the tire is a pneumatic tire, the negative ratio is calculated from the contact patch of the tire under conditions including a normal rim, a normal internal pressure, and a normal load. In the case of a non-pneumatic tire, the negative ratio can be similarly determined without the need of the normal internal pressure.

The term "normal rim" refers to a rim specified for each tire by the standard in a standard system including standards according to which tires are provided, and may be, for example, the "standard rim" in JATMA, "design rim" in TRA, or "measuring rim" in ETRTO.

The term "normal internal pressure" refers to an air pressure specified for each tire by the standard and may be the maximum air pressure in JATMA, the maximum value shown in Table "TIRE LOAD LIMITS AT VARIOUS COLD INFLATION PRESSURES" in TRA, or the "inflation pressure" in ETRTO.

The term "normal load" refers to a maximum load specified for each tire by the standard and may be the maximum load capacity in JATMA, the maximum value shown in Table "TIRE LOAD LIMITS AT VARIOUS COLD INFLATION PRESSURES" in TRA, or the maximum load of the "load capacity" in ETRTO.

The contact patch may be determined by mounting the tire on a normal rim, applying a normal internal pressure to the tire, and allowing the tire to stand at 25°C for 24 hours, followed by applying black ink to the tread surface of the tire and pressing it against a cardboard at a normal load (camber angle: 0°) for transfer to the cardboard.

The transfer may be performed on the tire in five positions rotated by 72 degrees relative to one another in the circumferential direction. Namely, the contact patch may be determined five times.

The average of the largest lengths in the tire axial direction of the five contact patches is denoted as L, and the average of the lengths in the direction orthogonal to the axial direction thereof is denoted as W.

The negative ratio (%) is calculated by the equation: [1 - {Average of areas of five contact patches transferred to cardboard (parts with black ink)}/(L × W)] × 100 (%).

Here, the average length and the average area are each the simple average of the five values. The "L × W" in the equation means the area of a virtual surface obtained by connecting the blank areas of the main and lateral grooves in the obtained contact patch.

The heavy duty tire includes a tread formed from the rubber composition containing one or more rubber components and one or more resins, and satisfies the following relationship (3):

$$(3) \quad S/N \geq 0.04$$

wherein S represents the total styrene content (% by mass) of the rubber components, and N represents the negative ratio (%) of the tread.

The lower limit of S/N is preferably 0.10 or higher, more preferably 0.15 or higher, still more preferably 0.20 or higher, particularly preferably 0.25 or higher. The upper limit of S/N is preferably 0.50 or lower, more preferably 0.40 or lower, still more preferably 0.35 or lower, particularly preferably 0.30 or lower. When S/N is within the range indicated above, the advantageous effect tends to be better achieved.

To better achieve the advantageous effect, the heavy duty tire desirably includes a tread formed from the rubber composition containing one or more rubber components and one or more resins, and satisfies the following relationship:

$$Silica \ content/S \geq 7$$

wherein Silica content represents the silica content (parts by mass) of the rubber composition, and S represents the total styrene content (% by mass) of the rubber components.

The reason for this advantageous effect is believed to be because an interaction of the styrene portion may occur not only with the resin but also with the silica, thereby making it possible to cause a large energy loss between the resin and the styrene portion upon deformation under high load conditions.

The lower limit of the value of "Silica content/S" is preferably 9 or higher, more preferably 10 or higher, still more preferably 11 or higher. The upper limit of the value of "Silica content/S" is preferably 50 or lower, more preferably 30 or lower, still more preferably 25 or lower, particularly preferably 20 or lower. When the value is within the range indicated above, the advantageous effect tends to be better achieved.

To better achieve the advantageous effect, the heavy duty tire desirably includes a tread formed from the rubber composition containing one or more rubber components and one or more resins, and satisfies the following relationship:

$$Silica \ content/N \geq 0.5$$

wherein Silica content represents the silica content (parts by mass) of the rubber composition, and N represents the negative ratio (%) of the tread.

The reason for this advantageous effect is believed to be as follows.

It is considered that good wet performance can be obtained under high load conditions because an interaction of the styrene portion may occur not only with the resin but also with the silica, thereby making it possible to cause a large energy loss between the silica and the styrene portion upon deformation under high load conditions, and also because, by increasing the silica content to a predetermined value or higher, it is possible to increase the energy loss, even when the negative ratio is high, although within the range of 25% or lower.

The lower limit of the value of "Silica content/N" is preferably 1.0 or higher, more preferably 1.5 or higher, still more preferably 2.0 or higher, particularly preferably 2.5 or higher. The upper limit of the value of "Silica content/N" is preferably 6.0 or lower, more preferably 5.5 or lower, still more preferably 5.0 or lower, particularly preferably 4.5 or lower. When the value is within the range indicated above, the advantageous effect tends to be better achieved.

To better achieve the advantageous effect, the heavy duty tire desirably includes a tread formed from the rubber composition containing one or more rubber components and one or more resins, and satisfies the following relationship:

$$Resin \ content/S \geq 1.0$$

wherein Resin content represents the resin content (parts by mass) of the rubber composition, and S represents the total styrene content (% by mass) of the rubber components.

The reason for this advantageous effect is considered to be because, when the resin content is higher than the styrene content, the resin molecules may gather around the styrene so that their interaction can easily occur.

The lower limit of the value of "Resin content/S" is preferably 1.5 or higher, more preferably 1.7 or higher, still more preferably 1.8 or higher, particularly preferably 1.9 or higher. The upper limit of the value of "Resin content/S" is preferably 8.0 or lower, more preferably 6.0 or lower, still more preferably 4.0 or lower, particularly preferably 3.0 or lower. When the value is within the range indicated above, the advantageous effect tends to be better achieved.

To better achieve the advantageous effect, the heavy duty tire desirably includes a tread formed from the rubber composition containing one or more rubber components and one or more resins, and satisfies the following relationship:

$$\text{Resin content/N} \geq 0.40$$

wherein Resin content represents the resin content (parts by mass) of the rubber composition, and N represents the negative ratio (%) of the tread.

The reason for this advantageous effect is considered to be because, when the resin content is higher than the styrene content, the resin molecules may gather around the styrene so that their interaction can easily occur.

The lower limit of the value of "Resin content/N" is preferably 0.45 or higher, more preferably 0.50 or higher, still more preferably 0.55 or higher, particularly preferably 0.60 or higher. The upper limit of the value of "Resin content/N" is preferably 1.00 or lower, more preferably 0.90 or lower, still more preferably 0.80 or lower, particularly preferably 0.70 or lower. When the value is within the range indicated above, the advantageous effect tends to be better achieved.

EXAMPLES

The present invention will be specifically described with reference to, but not limited to, examples.

The following describes the chemicals used in the examples and comparative examples.

(Rubber components)

NR: TSR20
SBR 1: Europrene SOL R C2525 (styrene content: 26% by mass, vinyl content: 24% by mass) available from Versalis
SBR 2: HPR840 (styrene content: 10% by mass, vinyl content: 42% by mass) available from JSR Corporation
BR: BR150B (vinyl content: 1% by mass, cis content: 97% by mass) available from Ube Industries, Ltd.

(Chemicals other than rubber components)

Carbon black: N134 (CTAB specific surface area: 135 m$^2$/g)
Silica 1: Ultrasil VN3 (average particle size: 17 nm) available from Evonik Degussa
Silica 2: Ultrasil 9100GR (average particle size: 15 nm) available from Evonik Degussa
Resin 1: Sylvatraxx 4150 (β-pinene resin) available from Arizona Chemical
Resin 2: Sylvatraxx 4401 (styrene/α-methylstyrene resin, copolymer of styrene and α-methylstyrene) available from Arizona Chemical
Resin 3: Ricon 340 (C5/C9 resin) available from Cray Valley
Resin 4: PR 120 (hydrogenated dicyclopentadiene resin, softening point: 120°C) available from Exxon Mobile Corporation
Silane coupling agent: Si266 (bis(3-triethoxysilylpropyl)disulfide) available from Evonik Degussa
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid "TSUBAKI" available from NOF Corporation
Zinc oxide: zinc oxide #1 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: Nocceler CZ (N-cyclohexyl-2-benzothiazolylsulfenamide) available from Ouchi Shinko Chemical Industrial Co., Ltd.
Vulcanization accelerator 2: Nocceler D (diphenylguanidine) available from Ouchi Shinko Chemical Industrial Co., Ltd.

(Examples and Comparative Examples)

The materials other than the sulfur and vulcanization accelerators according to the formulation recipe shown in Table 1 or 2 were kneaded at 150°C for five minutes using a 1.7 L Banbury mixer (Kobe Steel, Ltd.) to give a kneaded mixture. Then, the sulfur and vulcanization accelerators were added to the kneaded mixture, and they were kneaded at 80°C for five minutes using an open roll mill to give an unvulcanized rubber composition. The unvulcanized rubber composition was formed into the shape of a tread and assembled with other tire components to build an unvulcanized tire, followed by press vulcanization at 150°C for 30 minutes to obtain a test tire (heavy duty tire, size: 11R22.5). The test tires prepared as above were subjected to the evaluation below. Tables 1 and 2 show the results.

Moreover, the following evaluation standard was used to calculate indices in the evaluation.

Table 1, 2: Comparative Example 6

<Wet performance under high loads>

The test tires were mounted on the front and rear wheels of a truck. The braking distance of the truck with an initial speed of 100 km/h on a wet asphalt road was determined and expressed as an index using the equation below, where the index of the standard comparative example is taken as 100. A higher index indicates a shorter braking distance and better wet performance under high loads (wet braking performance under high loads).

(Index of wet performance under high loads) = (Braking distance of tire of standard comparative example)/(Braking distance of tire of each example) $\times$ 100

[Table 1]

| Formulation (parts by mass) | Example | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| NR | 85 | 85 | 75 | 85 | 85 | 85 | 75 | 70 | 80 | 70 | 60 | 85 | 70 | 85 | 85 | 85 | 85 |
| SBR 1 (styrene content: 26%, vinyl content: 24%) | 15 | 15 | | 15 | 15 | 15 | | 20 | | 30 | 40 | | 20 | 15 | 15 | 15 | 15 |
| SBR 2 (styrene content: 10%, vinyl content: 42%) | | | 25 | | | | 25 | | 20 | | | 15 | 10 | | | | |
| BR (vinyl content: 1%) | | | | | | | | 10 | | | | | | | | | |
| Carbon black | 50 | 50 | 50 | 40 | 10 | 5 | 5 | 5 | 50 | 50 | 50 | 50 | 50 | 30 | 10 | 10 | 50 |
| Silica 1 | | | | 20 | | | | | | | | | | 20 | 40 | 40 | |
| Silica 2 | | | | | 50 | 55 | 55 | 55 | | | | | | | | | |
| Resin 1 | 10 | | | 10 | 10 | | | 10 | 10 | 10 | 10 | 10 | 10 | | | | |
| Resin 2 | | 10 | 10 | | | | 10 | | | | | | | 10 | 10 | 10 | |
| Resin 3 | | | | | | 8 | | | | | | | | | | | |
| Resin 4 | | | | | | | | | | | | | | | | | 8 |
| Silane coupling agent | 0.0 | 0.0 | 0.0 | 2.0 | 6.0 | 6.6 | 6.6 | 6.6 | 0.0 | 0.0 | 0.0 | 0.0 | 0.0 | 2.0 | 4.8 | 4.0 | 0.0 |
| Antioxidant | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| Zinc oxide | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| Sulfur | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 2 | 0.0 | 0.0 | 0.0 | 2.0 | 5.0 | 5.5 | 5.5 | 5.5 | 0.0 | 0.0 | 0.0 | 0.0 | 0.0 | 2.0 | 4.0 | 4.0 | 0.0 |
| S (total styrene content (% by mass) of rubber components) | 3.9 | 3.9 | 2.5 | 3.9 | 3.9 | 3.9 | 2.5 | 5.2 | 2.0 | 7.8 | 10.4 | 1.5 | 6.2 | 3.9 | 3.9 | 3.9 | 3.9 |
| Total vinyl content (% by mass) of rubber components | 3.6 | 3.6 | 10.5 | 3.6 | 3.6 | 3.6 | 10.5 | 4.9 | 8.4 | 7.2 | 9.6 | 6.3 | 9.0 | 3.6 | 3.6 | 3.6 | 3.6 |
| Percentage (% by mass) of silica based on 100% by mass of filler content | 0 | 0 | 0 | 33 | 83 | 92 | 92 | 92 | 0 | 0 | 0 | 0 | 0 | 40 | 80 | 80 | 0 |
| Silica content/S | 0 | 0 | 0 | 5 | 13 | 14 | 22 | 11 | 0 | 0 | 0 | 0 | 0 | 5 | 10 | 10 | 0 |
| N (negative ratio (%)) | 25 | 25 | 25 | 25 | 25 | 20 | 20 | 15 | 25 | 25 | 25 | 25 | 13 | 25 | 25 | 25 | 25 |
| S/N | 0.16 | 0.16 | 0.10 | 0.16 | 0.16 | 0.20 | 0.13 | 0.35 | 0.08 | 0.31 | 0.42 | 0.06 | 0.48 | 0.16 | 0.16 | 0.16 | 0.16 |
| Silica content/N | 0.0 | 0.0 | 0.0 | 0.8 | 2.0 | 2.8 | 2.8 | 3.7 | 0.0 | 0.0 | 0.0 | 0.0 | 0.0 | 0.8 | 1.6 | 1.6 | 0.0 |
| Resin content/S | 2.6 | 2.6 | 4.0 | 2.6 | 2.6 | 2.1 | 4.0 | 1.9 | 5.0 | 1.3 | 1.0 | 6.7 | 1.6 | 2.6 | 2.6 | 2.6 | 2.1 |
| Resin content/N | 0.40 | 0.40 | 0.40 | 0.40 | 0.40 | 0.40 | 0.50 | 0.67 | 0.40 | 0.40 | 0.40 | 0.40 | 0.77 | 0.40 | 0.40 | 0.40 | 0.32 |
| Evaluation \| Wet performance under high loads | 103 | 107 | 107 | 110 | 117 | 117 | 117 | 122 | 101 | 108 | 110 | 101 | 103 | 112 | 120 | 116 | 108 |

15

[Table 2]

| | | | Comparative Example | | | | | |
|---|---|---|---|---|---|---|---|---|
| | | | 1 | 2 | 3 | 4 | 5 | 6 |
| Formulation (parts by mass) | NR | | 90 | 40 | 85 | 75 | 85 | 85 |
| | SBR 1 (styrene content: 26%, vinyl content: 24%) | | | 60 | 15 | | 15 | 15 |
| | SBR 2 (styrene content: 10%, vinyl content: 42%) | | 10 | | | 25 | | |
| | BR (vinyl content: 1%) | | | | | | | |
| | Carbon black | | 50 | 50 | 47 | 50 | 40 | 5 |
| | Silica 1 | | | | | | 20 | |
| | Silica 2 | | | | | | | 55 |
| | Resin 1 | | | | | | | |
| | Resin 2 | | 10 | 5 | | 10 | | |
| | Resin 3 | | | | | | | |
| | Resin 4 | | | | | | | |
| | Silane coupling agent | | 0.0 | 0.0 | 0.0 | 0.0 | 2.0 | 6.6 |
| | Antioxidant | | 1.0 | 1.0 | 1.0 | 1.0 | 1.0 | 1.0 |
| | Stearic acid | | 3.0 | 3.0 | 3.0 | 3.0 | 3.0 | 3.0 |
| | Zinc oxide | | 3.5 | 3.5 | 3.5 | 3.5 | 3.5 | 3.5 |
| | Sulfur | | 1.8 | 1.8 | 1.5 | 1.8 | 1.8 | 1.8 |
| | Vulcanization accelerator 1 | | 1.5 | 1.5 | 1.5 | 1.5 | 1.5 | 1.5 |
| | Vulcanization accelerator 2 | | 0.0 | 0.0 | 0.0 | 0.0 | 2.0 | 5.5 |
| S (total styrene content (% by mass) of rubber components) | | | 1.0 | 15.6 | 3.9 | 2.5 | 3.9 | 3.9 |
| Total vinyl content (% by mass) of rubber components | | | 4.2 | 14.4 | 3.6 | 10.5 | 3.6 | 3.6 |
| Percentage (% by mass) of silica based on 100% by mass of filler content | | | 0 | 0 | 0 | 0 | 33 | 92 |
| Silica content/S | | | 0 | 0 | 0 | 0 | 5 | 14 |
| N (negative ratio (%)) | | | 15 | 25 | 20 | 30 | 20 | 15 |
| S/N | | | 0.07 | 0.62 | 0.20 | 0.08 | 0.20 | 0.26 |
| Silica content/N | | | 0.0 | 0.0 | 0.0 | 0.0 | 1.0 | 3.7 |
| Resin content/S | | | 10.0 | 0.3 | 0.0 | 4.0 | 0.0 | 0.0 |
| Resin content/N | | | 0.67 | 0.20 | 0.00 | 0.33 | 0.00 | 0.00 |
| Evaluation | Wet performance under high loads | | 92 | 97 | 92 | 89 | 95 | 100 |

Tables 1 and 2 show that the examples exhibited excellent wet performance under high loads.

**Claims**

1. A heavy duty tire,

comprising a tread comprising at least one rubber component and at least one resin,
the heavy duty tire satisfying the following relationships (1) to (3):

$$(1) \quad 1.0\% \text{ by mass} < S \leq 12.0\% \text{ by mass};$$

$$(2) \quad N \leq 25\%;$$

and

$$(3) \quad S/N \geq 0.04$$

wherein S represents a total styrene content of the rubber component calculated as specified in the description, and N represents a negative ratio of the tread, wherein the negative ratio is the ratio of the total groove area within the ground contact surface to the total area of the ground contact surface measured as specified in the description.

2. The heavy duty tire according to claim 1,
wherein the resin is at least one selected from the group consisting of styrene resins, C5 resins, C9 resins, C5/C9 resins, and dicyclopentadiene resins, and hydrogenated products thereof.

3. The heavy duty tire according to claim 1 or 2,
wherein the tread has a percentage of silica of 20% by mass or higher based on 100% by mass of a filler content.

4. The heavy duty tire according to any one of claims 1 to 3,
wherein the tread has a percentage of silica of 50% by mass or higher based on 100% by mass of a filler content and comprises a silica having an average particle size of 15 nm or less.

5. The heavy duty tire according to any one of claims 1 to 4,
wherein the tread satisfies the following relationship with respect to a silica content and the total styrene content (S) of the rubber component:

$$\text{Silica content}/S \geq 7.$$

6. The heavy duty tire according to any one of claims 1 to 5,
wherein the tread satisfies the following relationship with respect to a silica content and the negative ratio (N) of the tread:

$$\text{Silica content}/N \geq 0.5.$$

7. The heavy duty tire according to any one of claims 1 to 6,
wherein the tread satisfies the following relationship with respect to a resin content and the total styrene content (S) of the rubber component:

$$\text{Resin content}/S \geq 1.0.$$

8. The heavy duty tire according to any one of claims 1 to 7,
wherein the tread satisfies the following relationship with respect to a resin content and the negative ratio (N) of the tread:

$$\text{Resin content}/N \geq 0.45.$$

**Patentansprüche**

1. Schwerlastreifen,

umfassend einen Laufstreifen, der mindestens eine Kautschukkomponente und mindestens ein Harz umfasst, wobei der Schwerlastreifen die folgenden Beziehungen (1) bis (3) erfüllt:

$$(1) \quad 1{,}0 \text{ Massen-\%} < S \leq 12{,}0 \text{ Massen-\%};$$

$$(2) \quad N \leq 25\%;$$

und

$$(3) \quad S/N \geq 0,04$$

wobei S einen Gesamtstyrolgehalt der Kautschukkomponente darstellt, der berechnet ist wie in der Beschreibung angegeben, und N einen Negativanteil des Laufstreifens darstellt, wobei der Negativanteil das Verhältnis der Gesamtrillenfläche innerhalb der Bodenkontaktoberfläche zu der Gesamtfläche der Bodenkontaktoberfläche darstellt, das gemessen ist wie in der Beschreibung angegeben.

2. Schwerlastreifen nach Anspruch 1,
wobei das Harz mindestens eines ist, welches ausgewählt ist aus der Gruppe bestehend aus Styrolharzen, C5-Harzen, C9-Harzen, C5/C9-Harzen und Dicyclopentadien-Harzen, und hydrierten Produkten davon.

3. Schwerlastreifen nach Anspruch 1 oder 2,
wobei der Laufstreifen einen prozentualen Anteil von Siliziumdioxid von 20 Massen-% oder höher aufweist, bezogen auf 100 Massen-% eines Füllstoffgehalts.

4. Schwerlastreifen nach einem der Ansprüche 1 bis 3,
wobei der Laufstreifen einen prozentualen Anteil von Siliziumdioxid von 50 Massen-% oder höher aufweist, bezogen auf 100 Massen-% eines Füllstoffgehalts, und ein Siliziumdioxid umfasst, das eine mittlere Partikelgröße von 15 nm oder weniger umfasst.

5. Schwerlastreifen nach einem der Ansprüche 1 bis 4,
wobei der Laufstreifen die folgende Beziehung hinsichtlich eines Siliziumdioxidgehalts und des Gesamtstyrolgehalts (S) der Kautschukkomponente erfüllt:

$$\text{Siliziumdioxidgehalt}/S \geq 7.$$

6. Schwerlastreifen nach einem der Ansprüche 1 bis 5,
wobei der Laufstreifen die folgende Beziehung hinsichtlich eines Siliziumdioxidgehalts und des Negativanteils (N) des Laufstreifens erfüllt:

$$\text{Siliziumdioxidgehalt}/N \geq 0,5.$$

7. Schwerlastreifen nach einem der Ansprüche 1 bis 6,
wobei der Laufstreifen die folgende Beziehung hinsichtlich eines Harzgehalts und des Gesamtstyrolgehalts (S) der Kautschukkomponente erfüllt:

$$\text{Harzgehalt}/S \geq 1,0.$$

8. Schwerlastreifen nach einem der Ansprüche 1 bis 7,
wobei der Laufstreifen dem folgenden Verhältnis hinsichtlich eines Harzgehalts und des Negativanteils (N) des Laufstreifens genügt:

$$\text{Harzgehalt}/N \geq 0,45.$$

**Revendications**

1. Pneu poids lourd,

comprenant une bande de roulement comprenant au moins un composant caoutchouc et au moins une résine,

le pneu poids lourd satisfaisant les relations suivantes (1) à (3) :

$$(1) \quad 1,0 \text{ \% en masse} < S \leq 12,0 \text{ \% en masse} ;$$

$$(2) \quad N \leq 25 \text{ \%} ;$$

et

$$(3) \quad S/N \geq 0,04$$

où S représente une teneur totale en styrène du composant caoutchouc calculée comme spécifié dans la description, et N représente un ratio négatif de la bande de roulement, dans lequel le ratio négatif est le ratio de la surface de rainure totale dans la surface de contact au sol sur la surface totale de la surface de contact au sol mesurée comme spécifié dans la description.

2. Pneu poids lourd selon la revendication 1, dans lequel la résine est au moins une résine choisie dans le groupe constitué des résines de styrène, des résines en C5, des résines en C9, des résines en C5/C9 et des résines dicyclo pentadiéniques et leurs produits hydrogénés.

3. Pneu poids lourd selon la revendication 1 ou la revendication 2,
dans lequel la bande de roulement possède un pourcentage de silice de 20 % en masse ou plus sur la base de 100 % en masse d'une teneur en charge.

4. Pneu poids lourd selon l'une quelconque des revendications 1 à 3,
dans lequel la bande de roulement possède un pourcentage de silice de 50 % en masse ou plus sur la base de 100 % en masse d'une teneur en charge et comprend une silice possédant une taille particulaire moyenne de 15 nm ou inférieure.

5. Pneu poids lourd selon l'une quelconque des revendications 1 à 4,
dans lequel la bande de roulement satisfait la relation suivante par rapport à une teneur en silice et à la teneur totale en styrène (S) du composant caoutchouc :

$$\text{Teneur en silice}/S \geq 7.$$

6. Pneu poids lourd selon l'une quelconque des revendications 1 à 5,
dans lequel la bande de roulement satisfait la relation suivante par rapport à une teneur en silice et au ratio négatif (N) de la bande de la bande de roulement :

$$\text{Teneur en silice}/N \geq 0,5.$$

7. Pneu poids lourd selon l'une quelconque des revendications 1 à 6,
dans lequel la bande de roulement satisfait la relation suivante par rapport à une teneur en résine et à la teneur totale en styrène (S) du composant caoutchouc :

$$\text{Teneur en résine}/S \geq 1,0.$$

8. Pneu poids lourd selon l'une quelconque des revendications 1 à 7,
dans lequel la bande de roulement satisfait la relation suivante par rapport à une teneur en résine et au ratio négatif (N) de la bande de roulement :

$$\text{Teneur en résine}/N \geq 0,45.$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3677638 A1
- EP 3228658 A1
- EP 3421260 A1